Europäisches Patentamt

European Patent Office

Office européen des brevets

(11) Publication number: **0 072 962**
**B1**

## (12) EUROPEAN PATENT SPECIFICATION

(45) Date of publication of patent specification: **17.07.85**

(21) Application number: **82107198.2**

(22) Date of filing: **09.08.82**

(51) Int. Cl.⁴: **B 29 C 63/10, F 16 L 57/00**

(54) Method of externally covering metal objects, e.g. tubes, with a synthetic resin layer.

(30) Priority: **21.08.81 NL 8103899**

(43) Date of publication of application:
**02.03.83 Bulletin 83/09**

(45) Publication of the grant of the patent:
**17.07.85 Bulletin 85/29**

(84) Designated Contracting States:
**AT BE CH DE FR GB IT LI LU NL SE**

(56) References cited:
**FR-A-2 375 023**
**FR-A-2 375 023**
**GB-A- 276 697**
**GB-A- 276 697**
**US-A-3 855 031**
**US-A-3 855 031**

(73) Proprietor: **Houdstermij. B.V. v/h H. Troost**
**P.O. Box 617**
**NL-3195 ZG Pernis (NL)**

(72) Inventor: **Koopman, Hendrik**
**Sterrenlaan 1**
**NL-3298 TM Puttershoek (NL)**

(74) Representative: **Hoijtink, Reinoud et al**
**OCTROOIBUREAU ARNOLD & SIEDSMA 1,**
**Sweelinckplein**
**NL-2517 GK Den Haag (NL)**

Courier Press, Leamington Spa, England.

## Description

The invention relates to a method of externally covering metal objects, for example tubes, with a synthetic thermo-setting resin layer, in which a tape-shaped resin-impregnated coating material is wound around the object, which object is subsequently heated to the curing temperature of the resin by means of an induction device fed by an alternating current and after curing of the resin the object is allowed to cool down.

This method is known from the German Patent Application DE—A—2 257 135.

Notably in chemical and oil industries the metal tubes to be buried in the ground have to be protected against corrosion. This is done by applying a synthetic resin layer thereto. In the known method, prior to enveloping the tube, this is preheated to about 80°C. To this end radiation heat is used. Thus, as soon as the coating material with the resin comes into contact with the tube the resin starts flowing, by which a satisfactory seal should be obtained between the various turns.

The invention has for its object to improve the known method in a manner such that the seal is better ensured and energy can be saved.

According to the invention a method of the kind specified in the first paragraph of page 1 is characterised in that during the winding operation the object is maintained approximately at room temperature and after the winding operation the object is gradually heated up to a first temperature, at which the resin becomes fluid and maintained at said temperature for a time sufficient to allow the resin to spread, the frequency of the alternating current being chosen such that the whole object is gradually heated. Since the object is not preheated, the resin hardly fluidizes upon winding. After completion of the winding operation the object is gradually heated to a range of medium temperature so that the resin will slowly and quite gradually become fluid and hence a satisfactory spread and a satisfactory seal and insulation are obtained. Moreover, the required amount of thermal energy is lower. The first temperature is about 90°C. This first temperature can be stepwise attained. Some time after the first temperature is reached the object is further heated to about 132°C and subsequently to curing the object is allowed to cool down. Heating of the object is carried out with the aid of an induction device in which the object is passed through an induction coil which is fed by an alternating current of a frequency lying in the medium frequency range. Thus the whole object is progressively heated. When feeding by an alternating current with a frequency in the high frequency range as proposed in the prior art described only the outer zone of the object is heated due to skin effect. When heating in the medium frequency range the thermal capacity becomes higher.

The invention will be described more fully with reference to a perspective drawing illustrating the method embodying the invention.

The pipe 1 to be coated is clamped in the rotatable jaw members 2 and 3, one of which is movable in a longitudinal direction on guides 4 and 5. With the aid of the tackles 6 and 7, which are movable along a rail 8, the pipe 1 can be suspended in or removed from the claw plates. Along the rail 9 is arranged a supporting and transporting mechanism 10, which is driven by an electric motor 11. An annular coil 12 is suspended to the supporting and transporting device. The coil 12 is fed from the alternating current generator 13. With the aid of the supporting and transporting mechanism 10 the coil is moved at the desired rate along the pipe 1, whilst the coil is fed by the desired current. During the transport the pipe is constantly rotated. After the pipe is wrapped around, it is heated in the manner described above up to about 90°C, a temperature increment being thus obtained at each passage of the pipe through the coil.

After some time the pipe 1 is further heated up to about 132°C. Subsequently the pipe 1 is allowed to cool down.

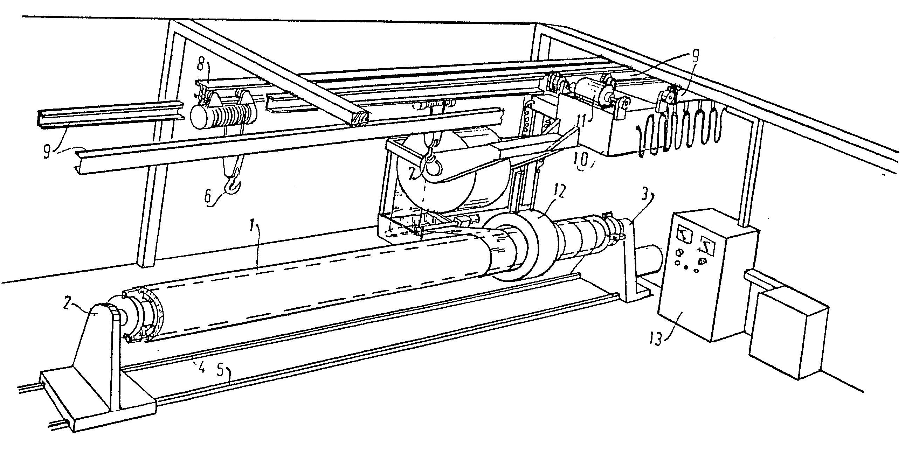

## Claims

1. A method of externally covering metal objects (1), for example tubes, with a synthetic thermosetting resin layer, in which a tape-shaped resin-impregnated coating material is wound around the object, which object is subsequently heated to the curing temperature of the resin by means of an induction device (12) fed by an alternating current and after curing of the resin the object is allowed to cool down, characterized in that during the winding operation the object is maintained approximately at room temperature and after the winding operation the object is gradually heated up to a first temperature, at which the resin becomes fluid, and maintained at said temperature for a time sufficient to allow the resin to spread, the frequency of the alternating current being chosen such that the whole object is gradually heated.

2. A method as claimed in Claim 1 characterized in that said first temperature is about 90°C.

3. A method as claimed in Claims 1 and 2 characterized in that said first temperature is attained in successive steps.

4. A method as claimed in Claim 3 characterized in that some time after said first temperature is attained the object is further heated up to about 132°C.

## Revendications

1. Un procédé pour le revêtement extérieur d'objets métalliques par exemple des tuyaux (1) avec une couche en résine synthétique thermodurcissable, dans lequel un matériau de revêtement sous la forme d'une bande imprégnée de résine est enroulé autour de l'objet, l'objet étant ensuite chauffé jusqu'à la température de durcissement de la résine au moyen d'un dispositif (12) à induction alimenté par un courant alternatif et après durcissement de la résine l'objet est laissé refroidir, procédé caractérisé en ce que pendant l'opération d'enroulement l'objet est maintenu approximativement à la température ambiante et après l'opération d'enroulement l'objet est chauffé progressivement jusqu'à une première température à laquelle la résine devient fluide et est maintenu à ladite température pendant un temps suffisant pour permettre à la résine de s'étaler, la fréquence du courant alternatif étant choisie telle que l'objet soit chauffé progressivement dans son ensemble.

2. Un procédé tel que revendiqué dans la revendication 1, caractérisé en ce que ladite première température est d'environ 90°C.

3. Un procédé tel que revendiqué dans les revendications 1 et 2, caractérisé en ce que ladite première température est atteinte par paliers successifs.

4. Un procédé tel que revendiqué dans la revendication 3, caractérisé en ce que quelques temps après que ladite première température ait été atteinte, l'objet est de nouveau chauffé jusqu'à environ 132°C.

**Patentansprüche**

1. Verfahren zum Außenbeschichten von metallischen Gegenständen (1), z.B. Rohren, mit einer synthetischen wärmeaushärtenden Harzschicht, bei dem ein bandförmiges harzimprägniertes Beschichtungsmaterial um den Gegenstand gewickelt wird, welcher anschließend mittels einer mit Wechselstrom betriebenen Induktionseinrichtung (12) auf die Aushärtetemperatur des Harzes erhitzt wird, und bei dem nach dem Aushärten des Harzes der Gegenstand abkühlen gelassen wird, dadurch gekennzeichnet, daß während des Bewickelns der Gegenstand auf annähernd Raumtemperatur gehalten wird und daß nach dem Bewickeln der Gegenstand allmählich auf eine erste Temperatur erhitzt wird, bei welcher das Harz fließfähig wird, und daß auf dieser Temperatur für eine zum Ausbreiten des Harzes ausreichende Zeit gehalten wird, wobei die Frequenz des Wechselstromes so gewählt wird, daß der gesamte Gegenstand allmählich erhitzt wird.

2. Verfahren nach Anspruch 1, dadurch gekennzeichnet, daß die erste Temperatur 90°C beträgt.

3. Verfahren nach den Ansprüchen 1 und 2, dadurch gekennzeichnet, daß die erste Temperatur in aufeinanderfolgenden Stufen erreicht wird.

4. Verfahren nach Anspruch 3, dadurch gekennzeichnet, daß einige Zeit nach dem Erreichen der ersten Temperatur der Gegenstand weiter bis auf etwa 132°C erhitzt wird.